# EUROPEAN PATENT APPLICATION

(11) **EP 4 818 004 A1**
(43) Date of publication of application: **07.10.2026**
(21) Application number: 26169233.9
(22) Date of filing: 30.03.2026
(51) Int. Cl.: B62D 25/14, B62D 25/08, B62D 29/04

(54) **PLASTIC MODULAR STRUCTURAL DASH**

(30) Priority: 02.04.2025 US 202519098697
(71) Applicant: Tesla, Inc., Austin, TX 78725 (US)
(72) Inventor: LAI, Timothy Pei Rui, Austin, Texas, 78725 (US); EMORI, Noboru, Austin, Texas, 78725 (US); DESHPANDE, Abhishek Anirudha, Austin, Texas, 78725 (US); FEDRIZZI, Adam, Austin, Texas, 78725 (US); RANDOLPH, Valerie Bumbaca, Austin, Texas, 78725 (US); KINGSBURY, Garret Eiler, Austin, Texas, 78725 (US); GENGE, Kyle Reuben, Austin, Texas, 78725 (US)
(74) Representative: Bryn-Jacobsen, Caelia

(57) **Abstract**

A method of manufacturing an integrated vehicle body structure (202) which includes forming a monolithic molded plastic panel (502) that defines a vehicle barrier extending across at least a portion of a vehicle cabin width, and a vehicle body structure comprising a monolithic molded plastic panel (502). The monolithic molded plastic panel (502) integrates a dash structure (204) and a cowl structure (206) for the vehicle. The method includes attaching components to the panel (502) and mounting it into the vehicle. The panel (502) may incorporate HVAC ducting (402), pre-assembled NVH panels (602,604) on both wet and dry sides, connection points (504) for vehicle systems, reinforcement ribs (506), embedded glass fiber, and molded-in datum pins (510). The vehicle body structure (202) includes the monolithic molded plastic panel (502) that provides the integrated dash (204) and cowl (206) structure when mounted to a vehicle, creating a barrier between the passenger cabin and external elements. The structure (202) may include pre-assembled NVH panels (602,604) spanning the vehicle cabin width, integrated connection points (504) for vehicle systems, and channels for perimeter seals (702).

## Description

### TECHNICAL FIELD

The present disclosure relates generally to vehicle body structures and, more specifically, to integrated plastic structural assemblies for defining a barrier between a passenger cabin and external elements in a vehicle. Some examples include a monolithic molded plastic panel that integrates a dash and cowl into a unitary structure for a vehicle. Some more particular examples also integrate thermal management, noise reduction, and one or more component mounting features into a structural assembly that can span across and define a barrier along at least a portion of a vehicle cabin width.

### BACKGROUND

Vehicle body structures sometimes serve as barriers between passenger cabins and external elements in automotive design. Traditional manufacturing approaches have relied on complex metal assemblies requiring extensive welding, sealing, and multi-step assembly processes. The assembly process for conventional vehicle body structures can present several manufacturing challenges. For examples, a typical metal dash structure alone may require assembly of over 50 separate parts using more than 100 spot welds and extensive body mastic application. The manufacturing sequence may demand precise fixturing and alignment procedures to ensure proper component positioning. A traditional dash structure assembly may also require numerous parts and extensive joining operations.

Further integration of other parts such as thermal management components, noise reduction materials, and subsystems typically requires multiple discrete assembly steps during general assembly. Traditional designs incorporate separate brackets and mounting components for vehicle systems, resulting in increased part count and assembly complexity. A conventional multi-stage process, from component fabrication through system integration, can create several inefficiencies in production planning and execution.

### BRIEF SUMMARY

Some examples of this disclosure provide an integrated vehicle body structure that incorporates a monolithic molded plastic panel that, when fitted to a vehicle, extends along at least a portion of a vehicle cabin width to define a barrier between a passenger cabin and other external elements. This approach seeks to address some limitations of traditional metal assemblies by enabling integration of multiple components or vehicle features into a single structure, thereby facilitating consolidation of various vehicle systems and subsystems in some examples. In some examples, a monolithic molded plastic panel helps to define distinct spaces within a vehicle by creating a barrier between the passenger cabin and a separate cavity. This cavity may house vehicle systems and components while remaining isolated from the passenger space.

Some examples of a vehicle body structure comprise glass-fiber embedded plastic materials selected for their structural properties. The glass-fiber embedding process creates a reinforced composite structure that maintains rigidity while enabling complex molded features. In some examples, these materials enable the integration of reinforcement ribs molded directly into the component, providing structural support without requiring separate reinforcement parts. In some examples, these materials further enable direct molding of datum pins for part-to-part alignment. The plastic material of the monolithic molded plastic panel further enables, in some examples, the integration of threaded fasteners through hot-embedding processes and may include an integrated windshield urethane path or channel molded directly into the monolithic molded plastic panel. In some examples, the integrated design further allows for incorporation of ducts, pads, seals, and absorbers that would otherwise require individual assembly steps.

Some examples enable pre-assembly capabilities where noise, vibration, and harshness (NVH) panels and Heating (HVAC) ducting can be pre-assembled to the structure using integrated mounting locations before installation in the vehicle. This can result in assembly efficiencies and reduction in assembly time, assembly line size, and assembly line length. In some examples, the integrated HVAC ducting provides thermal management through channels molded directly into the monolithic molded plastic panel. The HVAC ducting incorporates pre-assembled hose passthroughs that enable efficient routing of thermal management systems while maintaining airflow characteristics for cabin climate control. Some examples further provide thermal management through integrated HVAC ducting and improved NVH characteristics through pre-assembled components. The structure includes both wet-side and dry-side NVH panels that extend along at least a portion of the width of the vehicle cabin.

Some examples incorporate both wet-side and dry-side NVH panels that extend along at least a portion of the width of the vehicle cabin. These panels are pre-assembled to mounting locations molded directly into the monolithic molded plastic panel, providing comprehensive noise reduction capabilities while maintaining structural integrity.

Some examples provide methods of manufacturing the vehicle body structure that begin with forming the monolithic molded plastic panel. The formation process enables direct integration of components and features during molding, including NVH components that can be incorporated into the structure during its formation rather than added later. Some examples include sealing processes where a perimeter seal is applied to the monolithic molded plastic panel before the sealed structure is attached to the vehicle.

### BRIEF DESCRIPTION OF THE DRAWINGS

Throughout the drawings, reference numbers may be re-used to indicate correspondence between referenced elements. The drawings are provided to illustrate examples of the subject matter described herein and not to limit the scope thereof.
FIG. 1 shows a traditional stamped and separate dash and cowl structures used in example prior art vehicle designs, comprising multiple joined metal pieces that are pre-assembled to the vehicle body structure.
FIG. 2A is a perspective view illustrating an example integrated vehicle body structure including pre-assembled wet-side Noise, Vibration, and Harshness (NVH) panels and a perimeter seal, according to some examples.
FIG. 2B is a perspective view illustrating the vehicle body structure of FIG. 2A installed in a vehicle, according to some examples.
FIG. 3 is an exploded perspective view illustrating the assembly sequence for integrating the vehicle body structure, according to some examples.
FIG. 4 is a perspective view illustrating integrated Heating, Ventilation, and Air Conditioning (HVAC) ducting, mounting features, a dash structure and cowl structure within a monolithic molded plastic panel, according to some examples.
FIG. 5 is a perspective view illustrating molded reinforcement ribs, molded connection points, fasteners, and mounting locations integrated within the monolithic molded plastic panel, according to some examples.
FIG. 6A is a perspective view illustrating a wet-side NVH panel configured for pre-assembly to the monolithic molded plastic panel at mounting locations, according to some examples.
FIG. 6B is a perspective view illustrating a dry-side NVH panel configured for pre-assembly to the monolithic molded plastic panel, according to some examples.
FIG. 7A is a perspective view illustrating a perimeter seal configured for application to the monolithic molded plastic panel, according to some examples.
FIG. 7B is an assembly view illustrating the integration of the wet-side NVH panel with the monolithic molded plastic panel, according to some examples.
FIG. 7C is an assembly view illustrating the application of the perimeter seal to the integrated assembly of FIG. 7B, according to some examples.
FIG. 7D is a perspective view illustrating a Vehicle configured to receive the vehicle body structure, according to some examples.
FIG. 7E is a perspective view illustrating the vehicle body structure integrated within a vehicle, according to some examples.
FIG. 8 is a process flow diagram illustrating example operations for assembling the vehicle body structure, according to some examples.

### DETAILED DESCRIPTION

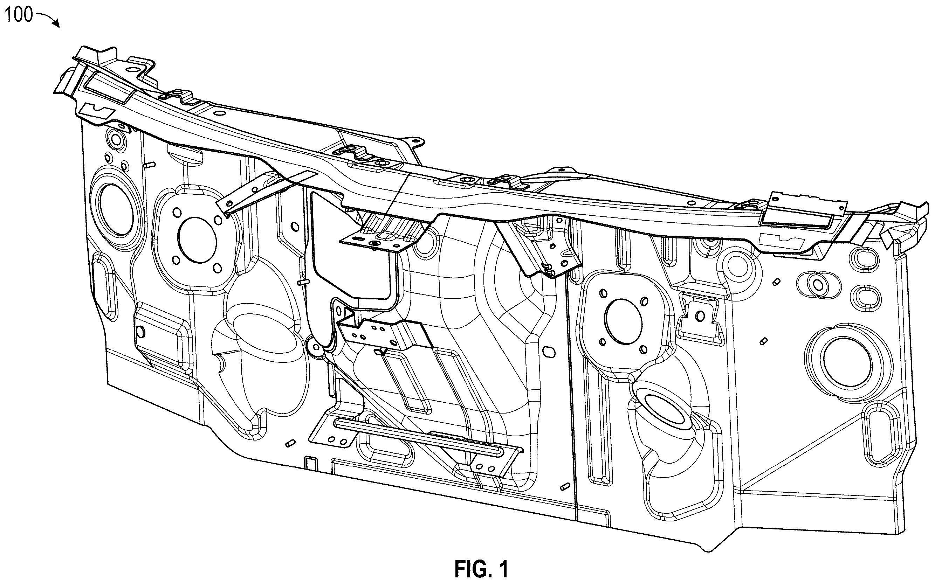

FIG. 1 illustrates a traditional stamped dash and cowl structure 100 used in conventional vehicle designs. Here the dash and cowl structures are formed as separate elements. The structure comprises multiple metal pieces that must be pre-assembled to the vehicle body structure. As described further above, the assembly process involves extensive joining operations including numerous spot welds and significant body mastic application to secure the components together.

Some components need to be installed or assembled in a specific sequence, including for example dash components, reinforcements, controller brackets, cowl components, wiper brackets, a cowl screen bracket, VIN plate mounting, instrument panel locator brackets, and various studs and nuts for component attachment. The center dash assembly, dash assembly, cowl lower assembly, and cowl top assembly may each require their own spot welds, studs, nuts and body mastic applications. These sub-assemblies must then be joined together before integration with the front underbody content.

The traditional metal construction requires separate mounting brackets to be welded or attached for supporting various vehicle systems. Additional brackets and mounting components are needed for thermal management components and noise reduction materials, which may need to be individually installed during the general assembly process. In internal combustion engine vehicles, this metal dash and cowl structure serves as a fire barrier, necessitating direct assembly to the body structure before other components can be mounted.

A paint shop process for the traditional structure requires application of paint shop sealer, foam materials, and liquid sound deadener. The traditional design also requires separate NVH absorbers including dash insulators and absorbers for both dry and wet sides, along with mounting clips. The HVAC integration requires a separate inlet component that must be individually assembled after the main structure is complete.

Viewed broadly, in various examples described herein, a vehicle body structure includes a unitary component that integrates traditionally separate structural elements. The unitary component includes a dash structure and a cowl structure formed as a single piece that can extend across at least a portion of the width of a vehicle cabin to define a transverse vehicle barrier.

In some examples, a dash structure, as used herein, refers to a structural barrier component positioned between an engine bay and a passenger cabin of a vehicle. As mentioned above, in traditional internal combustion engine vehicles, the dash structure is typically separately formed of metal to provide fire protection between the engine bay and passenger compartment. However, in electric vehicles where such fire protection requirements may be reduced, a dash structure may be formed of alternative materials such as glass-fiber embedded plastic. In some examples, the dash structure creates a cavity separate from the passenger cabin, where this cavity may be an engine bay or other mechanical space or storage volume. In some examples, this cavity is at least partially defined by the monolithic molded plastic panel serving as a barrier between the passenger cabin and the separate cavity space.

In some examples, a cowl structure, as used herein, refers to a structural component positioned between a hood and windshield area of a vehicle. Also as mentioned above, a cowl structure traditionally comprises multiple separately-assembled metal components that interface with both the dash structure and external body panels. These metal interface components provide structural connection points between the dash structure and vehicle body panels while maintaining proper alignment and sealing.

In some examples of the present disclosure, a monolithic molded plastic panel incorporates cowl and dash features directly into the molded structure, eliminating the need for separate metal components while maintaining structural connections between the dash and cowl structures and external body panels. In some examples, the cowl structure establishes a wet and dry barrier of the vehicle at a windshield interface, with the windshield urethane and seal being directly applied to the cowl structure.

In some described examples, these traditionally separate structures are integrated into a unified glass-fiber embedded plastic component that defines a barrier between the passenger cabin and external elements. This integration may eliminate the need for multiple assembly steps and joining operations that were previously required when these structures were separate metal components.

The unitary component may incorporate various additional features including, but not limited to, thermal management elements, noise/vibration/harshness (NVH) components, mounting locations, and integrated ducts and passthroughs. The integration of the dash and cowl structures provides a foundation for incorporating these additional features while reducing overall part count and assembly complexity.

In some examples, the unitary component replaces what traditionally required many separate metal parts, including individual dash and cowl components, multiple reinforcements, and various mounting brackets. The integrated structure maintains structural integrity while providing improved assembly efficiency through part consolidation.

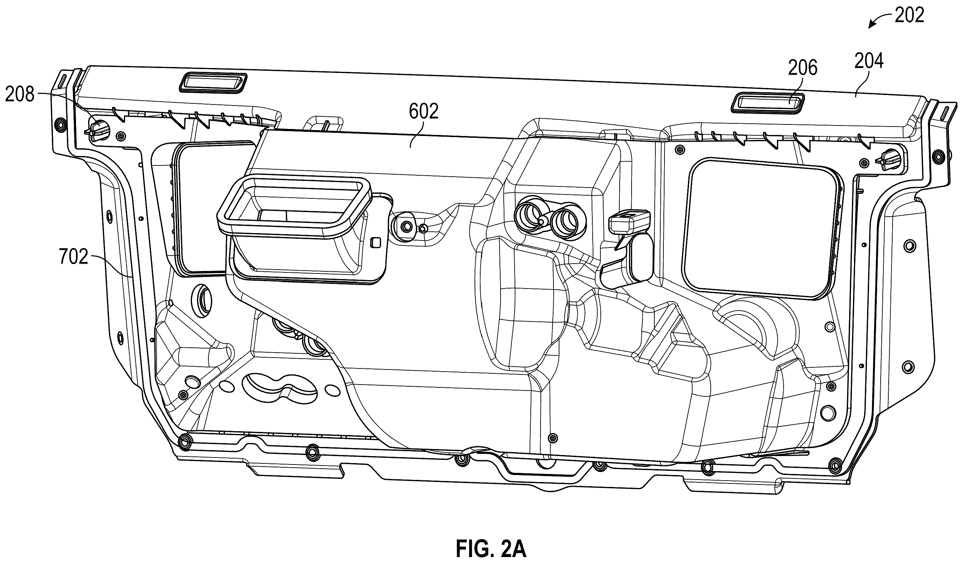

Turning again to the accompanying drawings in this regard, FIG. 2A shows present examples of a vehicle body structure 202 with pre-assembled wet-side NVH panel 602 and perimeter seal 702. The vehicle body structure 202 comprises a monolithic molded plastic panel 502 that integrates a dash structure 204 and cowl structure 206. The monolithic molded plastic panel 502 forms the core structure, with the dash structure 204 and cowl structure 206 unified into a single formed piece. The vehicle body structure 202 incorporates glass-fiber embedded materials in the dash structure 204 and the cowl structure 206. The figure shows how these structures integrate to create the barrier between passenger cabin and external elements, in some examples.

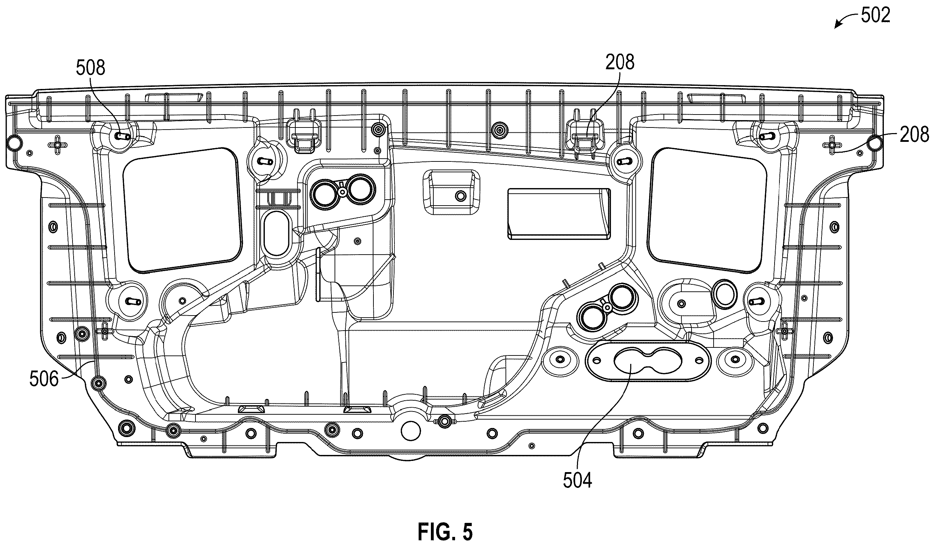

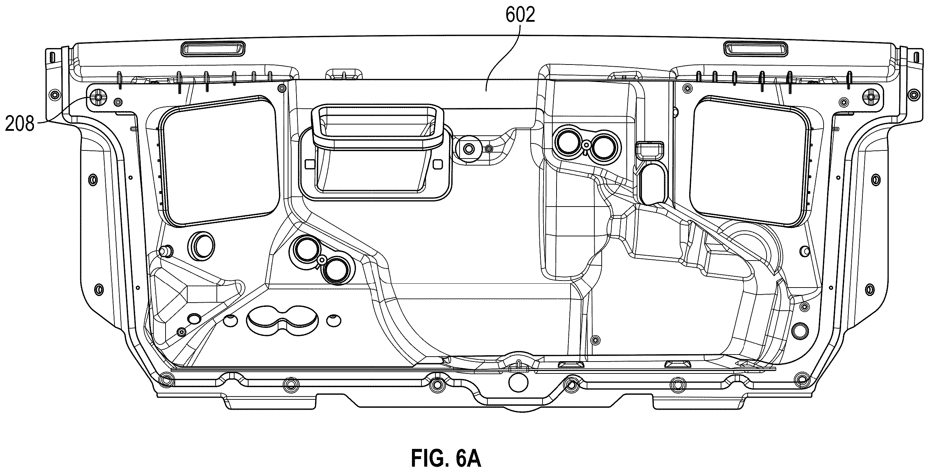

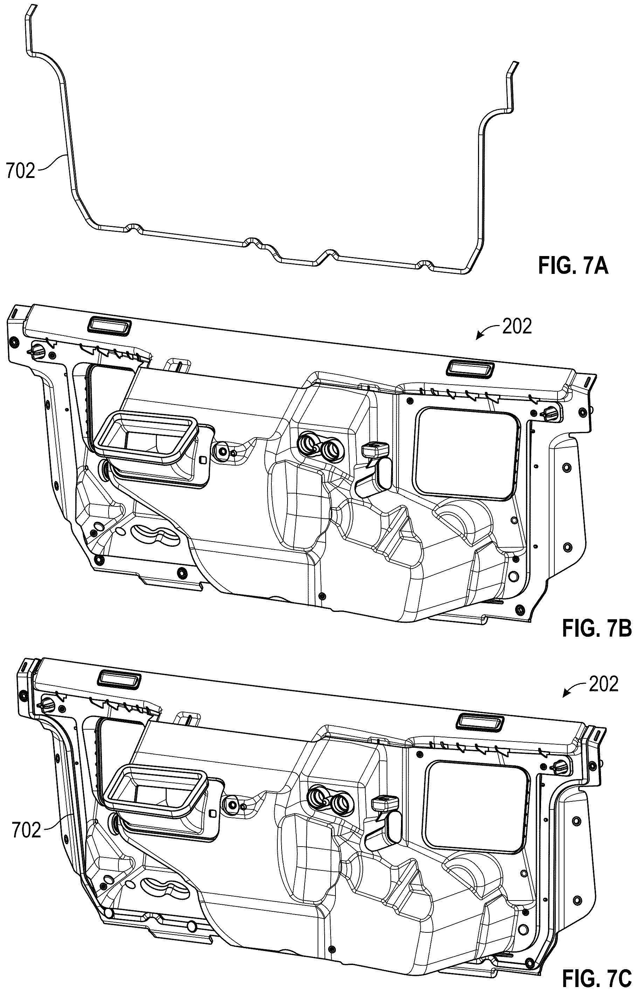

The wet-side NVH panel 602, as seen more clearly in FIG. 6A, is mounted to the monolithic molded plastic panel 502, as seen more clearly in FIG. 5, using mounting locations 208. The mounting locations enable the NVH panel to span the full vehicle cabin width to provide noise reduction coverage, in some examples. The perimeter seal 702, as seen more clearly in FIG. 7A follows the edge contours where the structure interfaces with the vehicle. In other examples, the mounting locations enable the NVH panel to extend a portion of the vehicle cabin width.

In some examples, the mounting locations 208 are positioned throughout the monolithic molded plastic panel 502 to enable direct attachment of components. In the vehicle body structure 202, these mounting locations are molded directly into the structure during formation to provide secure attachment points for the wet-side NVH panel 602.

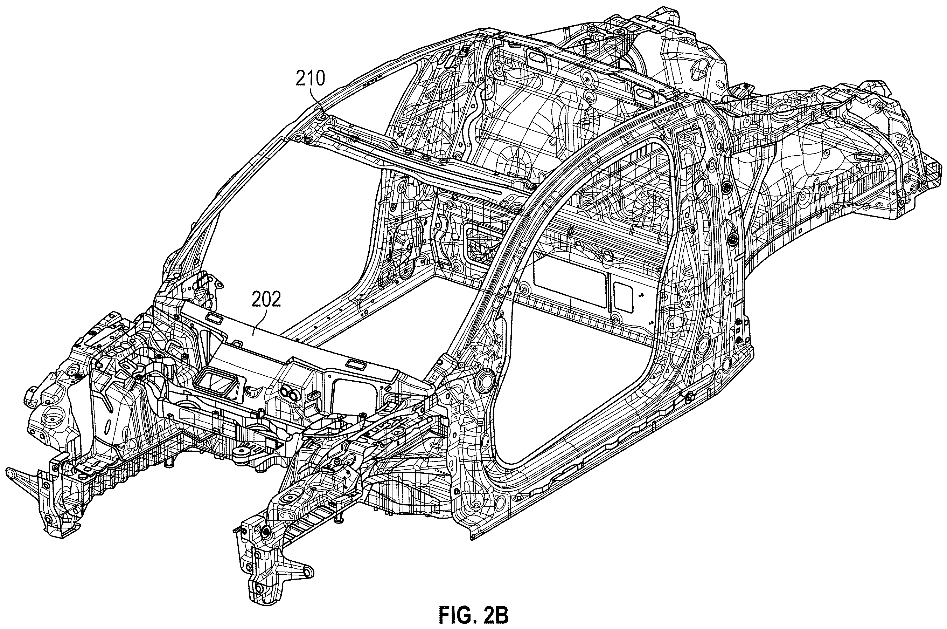

FIG. 2B is a perspective view illustrating the vehicle body structure 202 installed in a vehicle 210, according to some examples. The figure shows the complete assembly positioned and secured within the vehicle body structure, in some examples. In some examples, the mounting locations 208 span across the Vehicle 210 cabin width to ensure proper positioning and support of the wet-side NVH panel 602, which may be coextensive with the vehicle body structure 202 for noise reduction purposes.

The installation configuration demonstrates the positioning of the vehicle body structure 202 within the vehicle 210, which extend along at least a portion of the vehicle 210 cabin width to create a barrier between the passenger cabin and external elements.

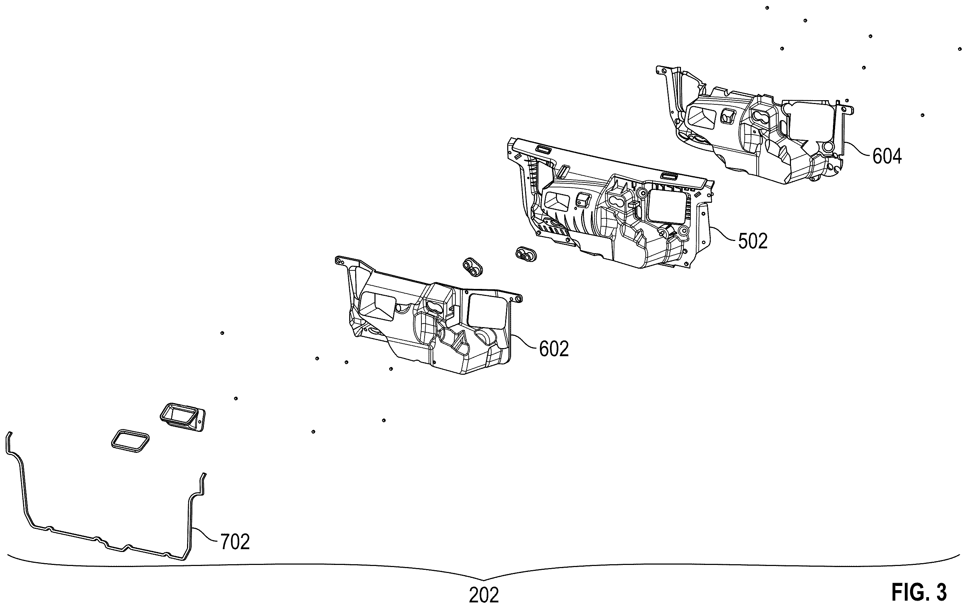

FIG. 3 is an exploded perspective view illustrating the assembly sequence for integrating the vehicle body structure 202, according to some examples. FIG. 3 shows the monolithic molded plastic panel 502, the wet-side NVH panel 602, the dry-side NVH panel 604, and the perimeter seal 702.

The structure demonstrates the integration of multiple systems within the monolithic molded plastic panel 502, in some examples. The HVAC ducting 402 is formed directly within the monolithic molded plastic panel 502 during the molding process. Connection points 504 are positioned for vehicle systems accommodating the mounting of wipers, instrument panels, vehicle computers, and other systems that interface with the structure, in some examples.

The wet-side NVH panel 602 and dry-side NVH panel 604 mount to pre-defined locations molded into the monolithic molded plastic panel 502. In some examples, these panels extend along at least a portion of the vehicle 210 cabin width coextensively with the monolithic molded plastic panel 502 and interface with integrated absorbers and pads molded during component formation.

The perimeter seal 702 follows the edge contours of the vehicle body structure 202 creating an environmental barrier between the monolithic molded plastic panel 502 and Vehicle 210. In some examples, the perimeter seal 702 interfaces with mounting locations 208 for securing and positioning the seal along the edge contours of the vehicle body structure 202.

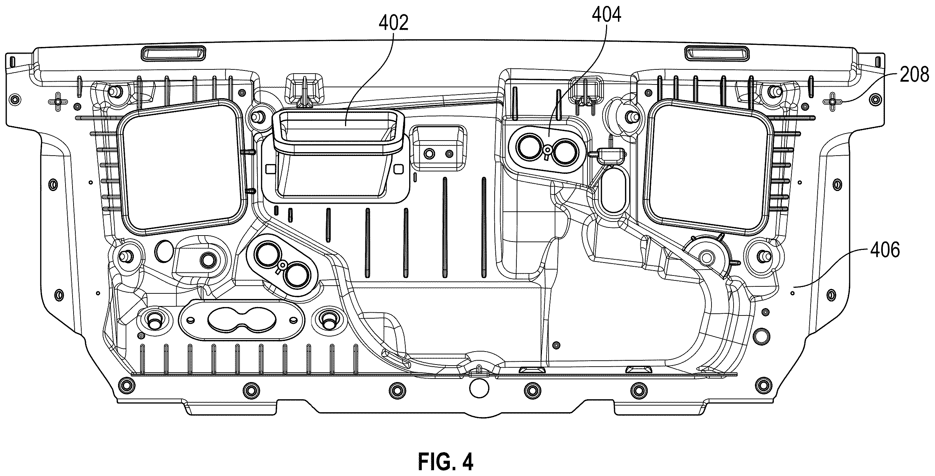

FIG. 4 illustrates integrated HVAC ducting 402, hose passthroughs 404, studs 406, and mounting locations 208 within the monolithic molded plastic panel 502, according to some examples. The monolithic molded plastic panel 502 integrates HVAC ducting 402 during the formation process to provide thermal management capabilities. The HVAC ducting 402 and hose passthroughs 404 are pre-assembled to the monolithic molded plastic panel 502 during formation.

The HVAC ducting 402 includes integrated hose passthroughs 404 that enable efficient routing of thermal management systems while maintaining required airflow characteristics, in some examples. The hose passthroughs 404 passthroughs are pre-assembled to the monolithic molded plastic panel 502 during the formation process, allowing for direct integration of the thermal management system.

In some examples, studs 406 are molded directly into the monolithic molded plastic panel 502 during formation. These molded studs 406 and threaded fasteners serve as connection points within the monolithic molded plastic panel 502, providing secure mounting capabilities.

In some examples studs 406 are hot-embedded into predetermined locations. The hot-embedding process maintains thread integrity while securing the fasteners within the monolithic molded plastic panel 502 for thread engagement for component attachment.

The mounting locations 208 are strategically positioned throughout the monolithic molded plastic panel 502structure to accommodate various vehicle systems and components. In some examples, these mounting locations 208 are formed directly in the monolithic molded plastic panel 502 during the molding process for efficient assembly and secure attachment of system components.

FIG. 5 is a perspective view illustrating molded reinforcement ribs 506, molded connection points 504, and fasteners 508 integrated within the monolithic molded plastic panel 502, according to some examples. The reinforcement ribs 506 are molded directly into the monolithic molded plastic panel 502 during formation distributing structural support throughout the monolithic molded plastic panel 502. The glass-fiber embedded construction may allow for these ribs to be positioned to maintain structural integrity.

In some examples, the molded connection points 504 provide mounting locations for vehicle systems such as wipers, instrument panels, and vehicle computers.

In some examples, the connection points 504 enable direct attachment of components without requiring separate brackets.

In some examples, the connection points 504 are strategically positioned throughout the structure to facilitate efficient assembly.

In some examples, the connection points 504 maintain precise spatial relationships between mounted components. The connection points 504 are positioned according to specific spatial and functional requirements of the vehicle systems they support to ensure proper alignment and interface with components. In some examples, the connection points 504 incorporate specific geometric features molded directly into the structure to facilitate proper component orientation and attachment. These features may include alignment surfaces, retention features, or other mounting interfaces specific to the supported vehicle systems.

In some examples, the molded connection points 504 integrate into the vehicle body structure 202 structure during formation to accommodate vehicle systems. The integration may occur simultaneously with the molding of the monolithic molded plastic panel 502.

In some examples, datum pins 510 and alignment features are molded into the monolithic molded plastic panel 502. The datum pins 510 may be molded into the monolithic molded plastic panel 502 simultaneously with the alignment features. The datum pins 510 may allow repeatable part-to-part positioning.

Fasteners 508 are integrated through a precision hot-embedding process at specific predetermined locations within the structure. The hot-embedding process maintains thread integrity while securing the fasteners within the monolithic molded plastic panel 502. In some examples, the hot-embedded fasteners enable secure attachment of vehicle systems while providing metal threaded elements at locations requiring mechanical fastening.

In some examples, the glass-fiber embedded construction enables direct integration of mounting locations 208 during the molding process. In some examples, the mounting locations 208 are designed to accommodate specific load requirements based on the components they support.

FIG. 6A is a perspective view illustrating a wet-side NVH panel 602 configured for pre-assembly to the monolithic molded plastic panel 502, according to some examples. In some examples, the wet-side NVH panel 602 extends along at least a portion of the vehicle cabin width substantially coextensively with the monolithic molded plastic panel 502. The panel integrates with specific mounting locations 208 molded into the monolithic molded plastic panel 502.

In some examples, the wet-side NVH panel 602 interfaces that integrated absorbers and pads that are pre-assembled to mounting locations 208 molded directly into the monolithic molded plastic panel 502.

In some examples, the mounting locations 208 are positioned throughout the structure to optimize noise reduction capabilities. In some examples, the mounting locations 208 incorporate specific features to ensure proper positioning of the Wet-side NVH panel 602. In some examples, the mounting locations 208 incorporate specific features to ensure secure attachment of the wet-side NVH panel 602.

In some examples, the mounting locations 208 are designed to maintain precise spatial relationships between the wet-side NVH panel 602 and adjacent components within the assembly.

In some examples, the wet-side NVH panel 602 works in conjunction with integrated thermal management features molded into the monolithic molded plastic panel 502 to provide thermal management capabilities.

In some examples, the mounting locations 208 enable the wet-side NVH panel 602 to be pre-assembled to the vehicle body structure 202 before vehicle 210 installation.

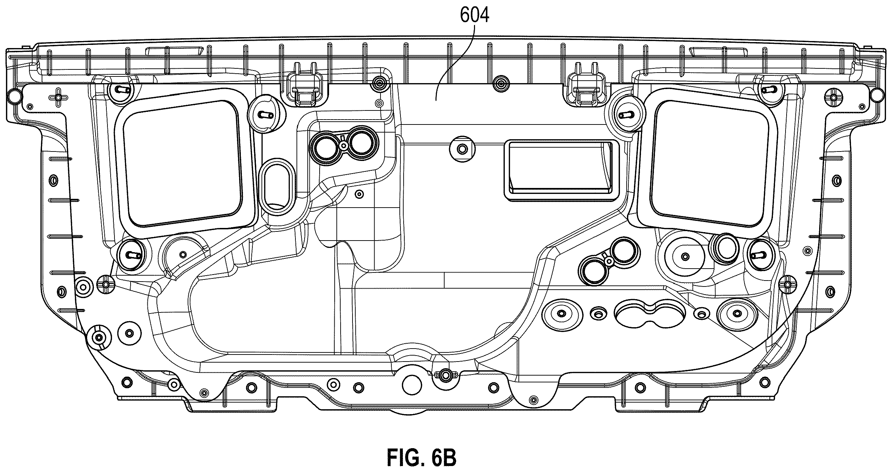

FIG. 6B is a perspective view illustrating a dry-side NVH panel 604 configured for pre-assembly to the monolithic molded plastic panel 502, according to some examples. The dry-side NVH panel 604 mounts to molded locations within the structure, extending along at least a portion of the vehicle 210 cabin width.

In some examples, the dry-side NVH panel 604 interfaces with absorbers and pads that are molded into the monolithic molded plastic panel 502 during its formation process.

In some examples, the mounting locations 208 for the dry-side NVH panel 604 are positioned to optimize noise reduction capabilities.

In some examples, the dry-side NVH panel 604 extends along at least a portion of the vehicle 210 cabin width coextensively with the vehicle body structure 202 to provide comprehensive acoustic management.

In some examples, the dry-side NVH panel 604 is pre-assembled to the vehicle body structure 202 before installation.

In some examples, the mounting locations are positioned to span across the vehicle cabin width to ensure proper positioning and support of the dry-side NVH panel 604.

In some examples, the dry-side NVH panel 604 interfaces with absorbers and pads that are molded into the monolithic molded plastic panel 502 during its formation process, enabling direct integration of noise reduction features.

FIG. 7A is a perspective view illustrating a perimeter seal 702 configured for application to the monolithic molded plastic panel 502, according to some examples. The perimeter seal 702 follows the edge contours of the structure, creating an environmental barrier between the vehicle body structure 202 and vehicle 210.

In some examples, the perimeter seal 702 interfaces with mounting locations 208 for securing and positioning the seal along the edge contours of the vehicle body structure 202.

In some examples, the perimeter seal 702 provides environmental protection through a single interface.

In some examples, the perimeter seal 702 follows contours designed to interface with the molded features of the monolithic molded plastic panel 502.

In some examples, the perimeter seal 702 is applied to the monolithic molded plastic panel 502 before the sealed structure is attached to the Vehicle 210. The pre-application of the perimeter seal 702 allows for pre-assembly of the environmental barrier.

In some examples, the perimeter seal 702 integrates with the mounting surfaces along the edge contours of the vehicle body structure 202 to provide environmental protection through a unified sealing approach.

FIG. 7B is an assembly view illustrating the integration of the wet-side NVH panel 602 with the monolithic molded plastic panel 502. The wet-side NVH panel 602 mounts to pre-defined locations molded into the monolithic molded plastic panel 502.

In some examples, the wet-side NVH panel 602 interfaces with integrated absorbers and pads that are pre-assembled to mounting locations 208 molded directly into the monolithic molded plastic panel 502.

In some examples, the mounting locations 208 are positioned throughout the structure to optimize noise reduction capabilities.

In some examples, the mounting locations 208 incorporate specific geometric features to facilitate proper orientation of the wet-side NVH panel 602. The specific geometric features may allow for secure attachment of the wet-side NVH panel 602.

In some examples, the mounting locations 208 are designed to maintain precise spatial relationships between the wet-side NVH panel 602 and adjacent components within the assembly.

In some examples, the mounting locations 208 enable the wet-side NVH panel 602 to be pre-assembled to the structure before vehicle 210 installation.

In some examples, the mounting locations 208 span across the vehicle 210 cabin width to ensure proper positioning and support of the wet-side NVH panel 602.

FIG. 7C is an assembly view illustrating the application of the perimeter seal 702 to the integrated assembly of the vehicle body structure 202. The seal interfaces with mounting surfaces along the edge contours of the vehicle body structure 202. The perimeter seal 702 provides environmental protection through a single interface.

In some examples, the perimeter seal 702 integrates with the mounting locations 208 along the edge contours of the vehicle body structure 202 to provide environmental protection through a unified sealing approach.

In some examples, the mounting locations 208 are specifically designed to maintain proper perimeter seal 702 positioning during and after assembly.

In some examples, the mounting locations 208 incorporate features that ensure consistent perimeter seal 702 compression and retention across the interface between the vehicle body structure 202 and Vehicle 210.

In some examples, the integrated mounting locations 208 enable the perimeter seal 702 to maintain its environmental protection capabilities while accommodating manufacturing tolerances.

In some examples, the mounting surfaces are positioned to optimize the interface between the perimeter seal 702 and the vehicle body structure 202.

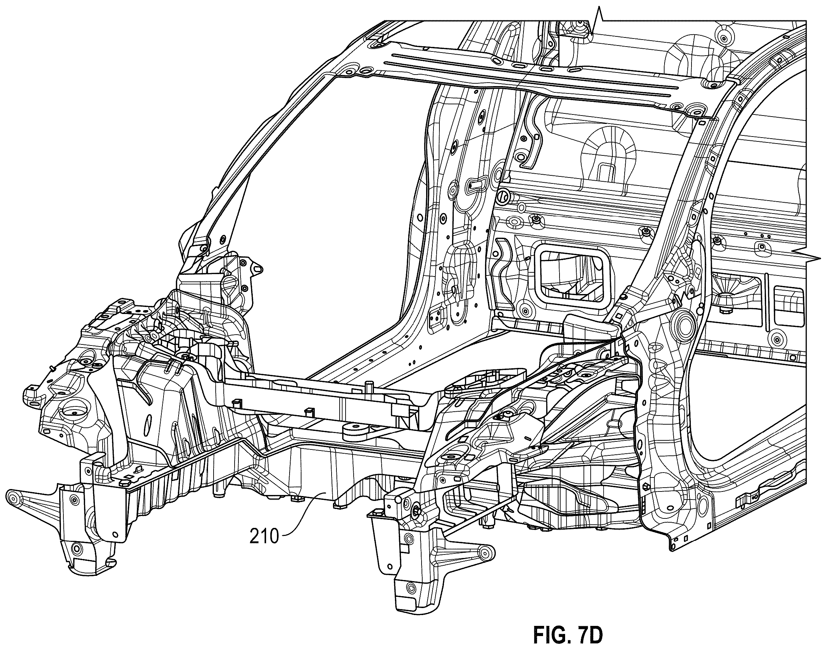

FIG. 7D is a perspective view illustrating a vehicle 210 configured to receive the vehicle body structure 202. In some examples, the vehicle 210 includes mounting interfaces that correspond to the molded datum pins 510 and alignment features integrated into the monolithic molded plastic panel 502.

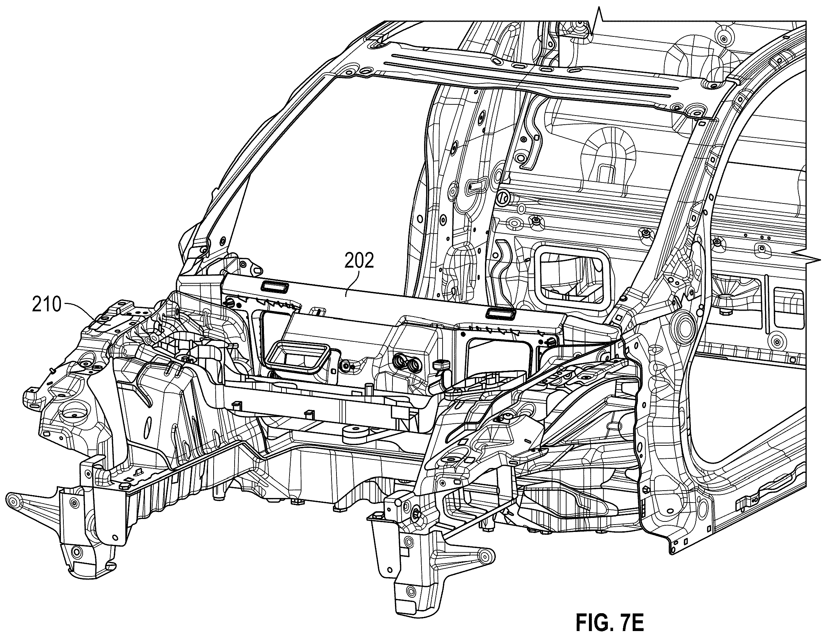

FIG. 7E is a perspective view illustrating the positioning and attachment of the vehicle body structure 202 to the vehicle 210. The installation utilizes molded datum pins 510 for alignment and integrated connection points 504 for secure attachment. The vehicle body structure 202 structure incorporates hot-embedded threaded fasteners 508 at predetermined locations to maintain secure attachment.

In some examples, the vehicle 210 includes mounting locations 208 that correspond to the molded datum pins 510. In some examples, the vehicle 210 includes alignment features integrated into the monolithic molded plastic panel 502.

In some examples, the connection points 504 are positioned according to specific spatial requirements to ensure proper alignment between the vehicle body structure 202 and vehicle 210.

In some examples, the mounting interfaces enable precise positioning of the vehicle body structure 202 within the vehicle 210 while maintaining proper spatial relationships with adjacent vehicle systems.

In some examples, the integrated connection points 504 provide secure attachment points between the vehicle body structure 202 and vehicle 210.

In some examples, the hot-embedded threaded fasteners 508 maintain secure attachment of the vehicle body structure 202 to the vehicle 210 through predetermined mounting locations.

In some examples, the installation configuration of the vehicle body structure 202 extends along at least a portion of the vehicle 210 cabin width to create a barrier between the passenger cabin and external elements.

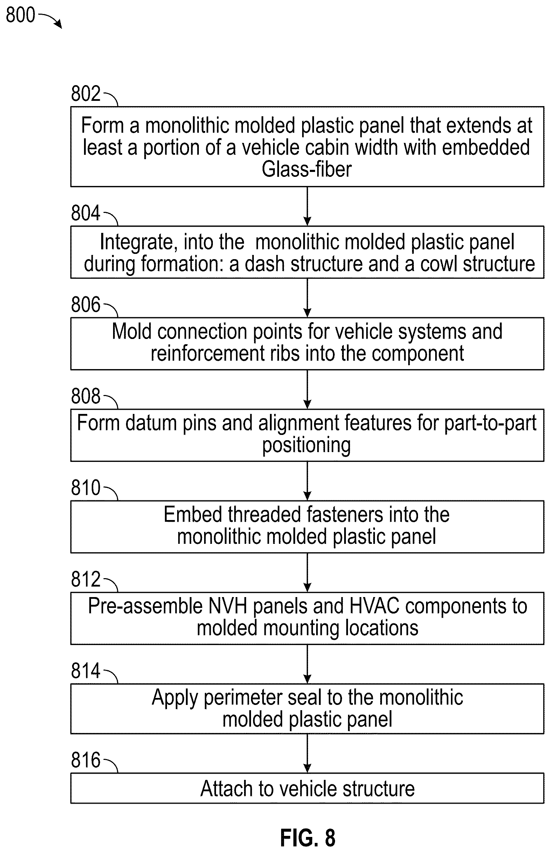

FIG. 8 is a process flow diagram illustrating example operations in assembly of a vehicle body structure 202, according to some examples.

At operation 802, the process begins with forming a monolithic molded plastic panel 502 that extends along at least a portion of a Vehicle 210 cabin width, in some examples. The formation process incorporates embedded glass-fiber material. In some examples, the glass-fiber embedding creates a reinforced composite structure that maintains rigidity while enabling molded features to be incorporated during formation.

At operation 804 the formation process integrates multiple components into the monolithic molded plastic panel 502 during its creation. In some examples, the formation process integrates the dash structure 204 and the cowl structure 206. The dash structure 204 and cowl structure 206 are consolidated into the single component. The consolidation into the single component creates a continuous barrier between the passenger cabin and external elements. This integration enables direct incorporation of both structural and functional features during the initial formation process.

At operation 806 connection points 504 and reinforcement ribs 506 features are molded directly into the component structure. In some examples, this includes forming molded connection points 504 for vehicle systems and creating reinforcement ribs 506 that provide structural support without requiring separate parts. The connection points 504 may be positioned to accommodate mounting of vehicle systems including wipers, instrument panels, and vehicle computers.

At operation 808, datum pins 510 and alignment features are formed into the monolithic molded plastic panel 502 for part-to-part positioning. The part-to-part positioning may be repeatable during assembly operations. The datum pins 510 may work in conjunction with the connection points 504 to maintain proper spatial relationships between the components.

At operation 810, threaded fasteners 508 are hot-embedded into predetermined locations within the monolithic molded plastic panel 502. The hot-embedded threaded fasteners 508 enable secure attachment of vehicle systems while providing metal threaded fasteners 508 at locations requiring mechanical fastening.

At operation 812, the wet-side NVH panel 602 and dry-side NVH panel 604 and HVAC ducting 402 components are pre-assembled to the molded mounting locations 208 locations.

At operation 814, the perimeter seal 702 seal is applied to the monolithic molded plastic panel 502. In some examples, the perimeter seal 702follows the edge contours to create an environmental barrier between the vehicle body structure 202 and the Vehicle 210. In some examples, the perimeter seal 702 interfaces with mounting locations 208 for securing and positioning. In some examples, the mounting locations 208 incorporate features that ensure consistent perimeter seal 702 compression. In some examples, the perimeter seal 702 mounting accommodates manufacturing tolerances while maintaining environmental protection.

At operation 816 the vehicle body structure 202 is positioned using the molded datum pins 510 and attached to the vehicle 210.

The operations of methods may be performed in whole or in part, may be performed in conjunction with some or all of the operations in other methods, and may be performed by any number of different systems. Any process descriptions, elements or blocks in the flow diagrams described herein should be understood as potentially representing modules, segments, or portions of code which include executable instructions for implementing specific logical functions or elements in the process. Alternate implementations are included within the scope of the examples described herein in which elements or functions may be deleted, executed out of order from that shown, or discussed, including substantially concurrently or in reverse order, depending on the functionality involved as would be understood by those skilled in the art.

In some examples, the vehicle body structure may be implemented in various vehicle configurations, each with specific adaptations of the monolithic molded plastic panel 502

In some examples. The vehicle body structure 202 may be scaled to accommodate larger vehicle 210 cabin widths. Additional reinforcement ribs 506 provide increased structural support, while expanded HVAC ducting 402 capacity enables modified internal channels.

In some examples, the vehicle body structure 202 may accommodate specialized sensor or computing equipment through molded connection points 504 as shown in FIG. 4. Additional computer mounting locations 208 are integrated, and HVAC ducting 402 may be modified to provide cooling for electronic components.

In some examples, the vehicle body structure 202's integration with other vehicle systems is facilitated by the consolidated plastic design. This integration may maintain precise positioning through molded datum pins 510.

### EXAMPLES

Thus, some examples of this disclosure may include one or more of the following aspects.

Example 1 includes a method of manufacturing an integrated vehicle body structure for a vehicle, the method comprising forming a monolithic molded plastic panel to define a transverse vehicle barrier extending across at least a portion of a vehicle cabin width, the monolithic molded plastic panel defining an integrated dash and cowl structure for the vehicle; attaching one or more components to the monolithic molded plastic panel; and mounting the monolithic molded plastic panel into the vehicle to define the transverse vehicle barrier.

Example 2: The method of Example 1, wherein the integrated dash and cowl structure of a mounted monolithic plastic panel comprises a structural component positioned between a hood and a windshield area of the vehicle to define a wet/dry barrier of the vehicle.

Example 3: The method of Example 2, wherein the integrated dash and cowl structure of a mounted monolithic plastic panel further comprises a structural barrier component positioned between an engine bay and a passenger cabin of the vehicle.

Example 4: The method of one or more of Example 1-3, further comprising integrating one or more Heating, Ventilation, and Air Conditioning (HVAC) ducts into the monolithic molded plastic panel before mounting the monolithic molded plastic panel into the vehicle.

Example 5: The method of one or more of Example 1-4, further comprising pre-assembling a wet-side noise, vibration, and harshness (NVH) sub-panel and a dry-side NVH sub-panel into the integrated vehicle body structure, the wet-side NVH sub-panel located on a first side of the monolithic molded plastic panel and the dry-side NVH sub-panel located on a second side of the monolithic molded plastic panel.

Example 6: The method of one or more of Example 1-5, further comprising integrating one or more connection points for a vehicle system or electrical harness into the monolithic molded plastic panel during formation of the monolithic molded plastic panel.

Example 7: The method of one or more of Example 1-6, further comprising integrating a channel for a perimeter seal into the monolithic molded plastic panel during formation of the monolithic molded plastic panel.

Example 8: The method of Example 7, further comprising introducing a seal or sealant material into the channel before mounting the monolithic molded plastic panel into the vehicle.

Example 9: The method of one or more of Example 1-8, further comprising molding one or more reinforcement ribs or embedding glass fiber into the monolithic molded plastic panel during formation of the monolithic molded plastic panel.

Example 10: The method of one or more of Example 1-9, further comprising hot-embedding one or more threaded fasteners into the monolithic molded plastic panel.

Example 11: A vehicle body structure comprising a monolithic molded plastic panel for defining a transverse vehicle barrier extending across at least a portion of a vehicle cabin width, the monolithic molded plastic panel providing, when mounted to a vehicle, an integrated dash and cowl structure for the vehicle.

Example 12: The vehicle body structure of Example 11, wherein the integrated dash and cowl structure comprises a structural component positioned between a hood and a windshield area of the vehicle to define a wet/dry barrier of the vehicle, and a structural barrier component positioned between an engine bay and a passenger cabin of the vehicle.

Example 13: The vehicle body structure of one or more of Example 11-12, further comprising a wet-side noise, vibration, and harshness (NVH) sub-panel located on a first side of the monolithic molded plastic panel; a dry-side NVH sub-panel located on a second side of the monolithic molded plastic panel; wherein the wet-side NVH sub-panel and the dry-side NVH sub-panel each span the vehicle cabin width substantially coextensively with the monolithic molded plastic panel when the vehicle body structure is mounted to a vehicle.

Example 14: The vehicle body structure of Example 13, wherein the dry-side NVH sub-panel and the wet-side NVH sub-panel are pre-assembled to one or more mounting locations molded into the monolithic molded plastic panel.

Example 15: The vehicle body structure of one or more of Example 11-14, further comprising one or more integrated connection points configured to connect to a system or electrical harness of the vehicle.

Example 16: The vehicle body structure of Example 15, wherein the one or more integrated connection points comprises a physical or electrical connection point for any one or more of: a wiper blade, a wiper motor, an instrument panel, an instrument panel component, a vehicle braking system, a vehicle lighting system, a vehicle guidance system, a vehicle sensor, and a vehicle processor.

Example 17: The vehicle body structure of one or more of Example 11-16, wherein the monolithic molded plastic panel includes one or more molded reinforcement ribs.

Example 18: The vehicle body structure of one or more of Example 11-17, wherein the monolithic molded plastic panel includes embedded glass fiber.

Example 19: The vehicle body structure of one or more of Example 11-18, wherein the monolithic molded plastic panel includes one or more molded-in datum or part-alignment pins.

Example 20: The vehicle body structure of one or more of Example 11-19, further comprising a channel for accepting sealant material or a perimeter seal.

Conditional language such as, among others, "can," "could," "might" or "may," unless specifically stated otherwise, are otherwise understood within the context as used in general to convey that some examples include, while other examples do not include some features, elements and/or steps. Thus, such conditional language is not generally intended to imply that features, elements and/or steps must include logic for deciding, with or without user input or prompting, whether these features, elements and/or steps are included or are to be performed in any particular example.

Disjunctive language such as the phrase "at least one of X, Y, or Z," unless specifically stated otherwise, is otherwise understood with the context as used in general to present that an item, term, etc., may be either X, Y, or Z, or any combination thereof (for example, X, Y, and/or Z). Thus, such disjunctive language is not generally intended to, and should not, imply that some examples require at least one of X, at least one of Y, or at least one of Z to each be present.

It should be emphasized that many variations and modifications may be made to the above-described examples, the elements of which are to be understood as being among other acceptable examples. All such modifications and variations are intended to be included herein within the scope of this disclosure.

It will also be appreciated that one or more of the elements depicted in the drawings/figures can also be implemented in a more separated or integrated manner, or even removed or rendered as inoperable in certain cases, as is useful in accordance with a particular application.

## Claims

1. A method of manufacturing an integrated vehicle body structure for a vehicle, the method comprising:
forming a monolithic molded plastic panel to define a transverse vehicle barrier extending across at least a portion of a vehicle cabin width, the monolithic molded plastic panel defining an integrated dash and cowl structure for the vehicle;
attaching one or more components to the monolithic molded plastic panel; and
mounting the monolithic molded plastic panel into the vehicle to define the transverse vehicle barrier.

2. The method of claim 1, wherein the integrated dash and cowl structure of a mounted monolithic plastic panel comprises a structural component positioned between a hood and a windshield area of the vehicle to define a wet/dry barrier of the vehicle.

3. The method of claim 2, wherein the integrated dash and cowl structure of a mounted monolithic plastic panel further comprises a structural barrier component positioned between an engine bay and a passenger cabin of the vehicle.

4. The method of any one of the preceding claims, further comprising integrating one or more Heating, Ventilation, and Air Conditioning (HVAC) ducts into the monolithic molded plastic panel before mounting the monolithic molded plastic panel into the vehicle.

5. The method of any one of the preceding claims, further comprising pre-assembling a wet-side noise, vibration, and harshness (NVH) sub-panel and a dry-side NVH sub-panel into the integrated vehicle body structure, the wet-side NVH sub-panel located on a first side of the monolithic molded plastic panel and the dry-side NVH sub-panel located on a second side of the monolithic molded plastic panel.

6. The method of any one of the preceding claims, further comprising integrating one or more connection points for a vehicle system or electrical harness into the monolithic molded plastic panel during formation of the monolithic molded plastic panel.

7. The method of any one of the preceding claims, further comprising integrating a channel for a perimeter seal into the monolithic molded plastic panel during formation of the monolithic molded plastic panel.

8. The method of claim 7, further comprising introducing a seal or sealant material into the channel before mounting the monolithic molded plastic panel into the vehicle.

9. The method of any one of the preceding claims, further comprising molding one or more reinforcement ribs or embedding glass fiber into the monolithic molded plastic panel during formation of the monolithic molded plastic panel.

10. The method of any one of the preceding claims, further comprising hot-embedding one or more threaded fasteners into the monolithic molded plastic panel.

11. A vehicle body structure comprising:
a monolithic molded plastic panel for defining a transverse vehicle barrier extending across at least a portion of a vehicle cabin width, the monolithic molded plastic panel providing, when mounted to a vehicle, an integrated dash and cowl structure for the vehicle.

12. The vehicle body structure of claim 11, wherein the integrated dash and cowl structure comprises:
a structural component positioned between a hood and a windshield area of the vehicle to define a wet/dry barrier of the vehicle, and
a structural barrier component positioned between an engine bay and a passenger cabin of the vehicle.

13. The vehicle body structure of claim 11, further comprising:
a wet-side noise, vibration, and harshness (NVH) sub-panel located on a first side of the monolithic molded plastic panel;
a dry-side NVH sub-panel located on a second side of the monolithic molded plastic panel; wherein
the wet-side NVH sub-panel and the dry-side NVH sub-panel each span the vehicle cabin width substantially coextensively with the monolithic molded plastic panel when the vehicle body structure is mounted to a vehicle; and optionally
wherein the dry-side NVH sub-panel and the wet-side NVH sub-panel are pre-assembled to one or more mounting locations molded into the monolithic molded plastic panel.

14. The vehicle body structure of any one of claims 11-13, further comprising one or more integrated connection points configured to connect to a system or electrical harness of the vehicle; and optionally
wherein the one or more integrated connection points comprises a physical or electrical connection point for any one or more of: a wiper blade, a wiper motor, an instrument panel, an instrument panel component, a vehicle braking system, a vehicle lighting system, a vehicle guidance system, a vehicle sensor, and a vehicle processor.

15. The vehicle body structure of any one of claims 11-14, wherein the monolithic molded plastic panel includes one or more molded reinforcement ribs; or optionally
wherein the monolithic molded plastic panel includes embedded glass fiber; or optionally
wherein the monolithic molded plastic panel includes one or more molded-in datum or part-alignment pins; or optionally
further comprising a channel for accepting sealant material or a perimeter seal.
